(19) Europäisches Patentamt
European Patent Office
Office européen des brevets

(11) **EP 0 940 601 B1**

(12) **EUROPÄISCHE PATENTSCHRIFT**

(45) Veröffentlichungstag und Bekanntmachung des Hinweises auf die Patenterteilung:
**19.10.2005  Patentblatt 2005/42**

(51) Int Cl.⁷: **F16F 3/02**, G05G 5/05, G05G 7/16, G05G 7/04

(21) Anmeldenummer: **99103665.8**

(22) Anmeldetag: **25.02.1999**

(54) **Stellvorrichtung mit einem Stellelement, auf das eine mit dem Stellweg zunehmende Rückstellkraft einwirkt**

Controlling device with a controlling element on which acts a counter-force proportional to the control movement

Dispositif de commande avec un élément de commande sur lequel agit une force de réaction proportionnelle au déplacement

(84) Benannte Vertragsstaaten:
**DE FR GB IT**

(30) Priorität: **05.03.1998  DE 19809544**

(43) Veröffentlichungstag der Anmeldung:
**08.09.1999  Patentblatt 1999/36**

(73) Patentinhaber: **Deutsches Zentrum für Luft- und Raumfahrt e.V.**
**53175 Bonn (DE)**

(72) Erfinder:
• **Büter, Andreas, Dipl.-Ing.**
**38102 Braunschweig (DE)**
• **Breitbach, Elmar, Prof. Dr.-Ing.**
**37075 Göttingen (DE)**

(74) Vertreter: **Rehberg Hüppe + Partner**
**Postfach 31 62**
**37021 Göttingen (DE)**

(56) Entgegenhaltungen:
**EP-A- 0 127 741        DE-C- 19 509 485**
**DE-C- 19 541 600**

• **PATENT ABSTRACTS OF JAPAN vol. 1996, no. 07, 31. Juli 1996 (1996-07-31) & JP 08 084401 A (MITSUBISHI MATERIALS CORP), 26. März 1996 (1996-03-26)**

**Beschreibung**

Die Erfindung bezieht sich auf eine Stellvorrichtung mit den Merkmalen des Oberbegriffs des Anspruchs 1.

Bei der Verwendung von Stellvorrichtungen mit beliebigen Stellelementen, die auch als Translatoren bezeichnet werden, treten wegabhängige Rückstellkräfte auf, die die Effizienz des Stellelements der Stellvorrichtung gegenüber theoretisch erreichbaren Werten mindern. Die wegabhängigen Rückstellkräfte basieren typischerweise auf der positiven Steifigkeit einer zu verstellenden Struktur, an der die Stellvorrichtung angreift, aber beispielsweise auch auf der Steifigkeit von elastischen Mitteln, mit denen eine Druckvorspannung auf ein Stellelement mit einem Piezokristall ausgeübt wird, um Zugbelastungen des Piezokristalls sicher zu vermeiden. Insbesondere die Progressivität der Rückstellkräfte mit dem Stellweg der Stellvorrichtung reduziert die wirksame Längenänderung $\Delta l$ der Stellvorrichtung gegenüber der ohne elastische Krafteinwirkung erreichbaren Längenänderung der Stellvorrichtung $\Delta l_o$. So gilt:

$$\Delta l = \Delta l_o \ * \ c_s \ / \ (c_R + c_s),$$

wobei $c_R$ die Steifigkeit der Rückstellkraft, d.h. der Struktur einschließlich der Steifigkeit eines das Stellelement vorspannenden elastischen Mittels, und $c_S$ die Eigensteifigkeit des Stellelements ist.

Aus der EP 0 127 741 A1 ist eine Feder mit negativer Steifigkeit in einem Nulldurchgang ihres Federwegs für den technischen Bereich der Federung von Kraftfahrzeugen bekannt. Dabei kann der Nulldurchgang der Federkennlinie der Feder mit negativer Steifigkeit relativ zu dem Federweg einer parallel geschalteten Tragfeder mit positiver Steifigkeit verstellt werden. Die bekannte Feder mit negativer Steifigkeit ist zweiteilig. Beide Teile weisen jeweils mehrere, in Richtung des Federwegs hintereinander geschaltete Permanentmagnete auf, wobei zwischen den Permanentmagneten Weicheisenzwischenstücke angeordnet sind, an die die beiden benachbarten Permanentmagnete mit jeweils gleichnamigen Polen angrenzen. Die Weicheisenzwischenstücke bewirken eine Fokussierung der magnetischen Feldlinien bzw. des magnetischen Felds, das dann seitlich, d. h. radial von der axialen Anordnung der Permanentmagnete weg, aus den Weicheisenzwischenstücken austritt und einem magnetischen Pol ausbildet, welcher gleichnamig mit den angrenzenden Polen der benachbarten Permanentmagnete ist. Dabei kann jede Feder mit negativer Steifigkeit an jedem ihrer beiden Teile mehrere Weicheisenzwischenstücke aufweisen, wobei beide Teile die gleiche Anzahl von Weicheisenzwischenstücken besitzen, die sich jeweils paarweise in dem Nulldurchgang gegenüberliegen.

In der DE 195 41 600 A1 wird eine weitere konkrete Anwendungsmöglichkeit der aus der EP 0 127 741 A1 bekannten Feder mit negativer Steifigkeit beschrieben. Es handelt sich um die weiche Federung der Wippe eines Stromabnehmers für ein schnelles Schienenfahrzeug. Aus der DE 195 41 600 C1 gehen weiterhin verschiedene Möglichkeiten der Übersetzung des Federwegs einer Feder mit negativer Steifigkeit hervor, um den effektiven Federweg dieser Federn zu vergrößern.

Eine Stellvorrichtung mit den Merkmalen des Oberbegriffs des Patentanspruchs 1 ist aus der US 5,735,374 bekannt.

Der Erfindung liegt die Aufgabe zugrunde, eine Stellvorrichtung mit den Merkmalen des Oberbegriffs des Anspruchs 1 aufzuzeigen, bei der die wirksame Längenänderung des Stellelements möglichst groß ist, d. h. durch die auf das Stellelement einwirkende Rückstellkraft möglichst wenig reduziert wird.

Diese Aufgabe wird erfindungsgemäß durch eine Stellvorrichtung mit den Merkmalen des Anspruchs 1 gelöst. Die Feder mit negativer Steifigkeit $c_N$ dient dazu, die auf das Stellelement wirkende Steifigkeit $c_G$ der Gesamtkräfte zu reduzieren. Durch die bezogen auf die Steifigkeit $c_R$ der Rückstellkräfte beliebig wählbare Größe der negativen Steifigkeit $c_N$ kann die effektiv auf das Stellelement wirkende Gesamtsteifigkeit $c_G$ in dem Arbeitsbereich des Stellwegs theoretisch beliebig verändert werden, da $c_G$ gleich $c_R + c_N$ ist. Allerdings sollte $c_G$ für eine eindeutige Kraft-Weg-Zuordnung größer null bleiben. Im Grenzfall $c_G$ gegen null ist aber sogar eine vollständige Ausnutzung der ursprünglichen, d. h. ohne elastische Krafteinwirkung erreichbaren Längenänderung des Stellelements $\Delta l_o$ möglich. Die Erfindung setzt also nicht bei einer absoluten Reduzierung der auf das Stellelement einwirkenden Rückstellkraft sondern bei einer Kompensation, d.h. bei einer Reduzierung der Steifigkeit der Rückstellkraft an.

Die Feder mit negativer Steifigkeit wird dem Stellelement parallel geschaltet. Dabei können die Feder mit negativer Steifigkeit und das Stellelement zwei gemeinsame endseitige Angriffspunkte für den Angriff an der zu verstellenden Struktur und einer Basis aufweisen. Ebenso ist es im Rahmen der Parallelschaltung des Stellelements und der Feder mit negativer Steifigkeit aber auch möglich, daß die Feder mit negativer Steifigkeit und die zu verstellende Struktur zwei gemeinsame endseitige Angriffspunkte an dem Stellelement und der Basis aufweisen. Durch den symmetrischen Verlauf der Federkennlinie der Feder mit negativer Steifigkeit zu ihrem Nulldurchgang ist bei beiden Anordnungen eine Entlastung des Stellelements der Stellvorrichtung von der Progressivität der Rückstellkraft gegeben.

Die neue Stellvorrichtung weist einen begrenzten Arbeitsbereich des Stellwegs auf, in dem die negative Steifigkeit $c_N$ die positive Steifigkeit der mit dem Stellweg zunehmenden Rückstellkraft zumindest teilweise kompensiert. Wenn die Stellvorrichtung unter unterschiedlichen Bedingungen betrieben wird, kann es sinnvoll sein, den Nulldurchgang der Federkennlinie der Feder mit negativer Steifigkeit in Richtung des Stellwegs einstellbar vorzusehen, um den erfindungsgemäßen begrenzten Arbeitsbereich des Stellwegs an die unterschiedlichen Betriebsbedingungen optimal anzupassen.

Die Feder mit negativer Steifigkeit kann eine magnetische Feder sein, wie sie aus der EP 0 127 741 A1 grundsätzlich bekannt ist. Das heißt, sie weist in der Regel jeweils zwei mit Permanentmagneten versehene, sich über den Federweg gegeneinander verschiebende Teile auf. Dabei können die beiden Teile der Feder mit negativer Steifigkeit ihrerseits jeweils mehrere, in Richtung des Federwegs hintereinander geschaltete Permanentmagnete aufweisen, zwischen denen Weicheisenzwischenstücke angeordnet sind, an welche die beiden benachbarten Permanentmagnete jeweils mit gleichnamigen Polen angrenzen. Die magnetische Feder kann statt der Permanentmagnete aber auch Elektromagnete aufweisen, die entsprechend angeordnet sein können.

Zur Abstimmung der Federkennlinie der Feder mit negativer Steifigkeit an einen erfindungsgemäß gekennzeichneten Arbeitsbereich des Federwegs gewünschter Größe, kann eine Über- oder Untersetzung für den Federweg der Feder mit negativer Steifig-keit vorgesehen sein. Solche Über- bzw. Untersetzungen sind grundsätzlich aus der DE 195 41 600 A1 bekannt, wobei die dort nur als Übersetzungen beschriebenen mechanischen Mittel in umgekehrter Richtung auch als Untersetzungen verwendet werden können.

Wenn das Stellelement ein einen Piezokristall unter Druckvorspannung setzendes elastisches Mittel aufweist, um Zugbelastungen des Piezokristalls zu vermeiden, so ist die Steifigkeit des elastischen Mittels genauso zu beurteilen wie die Steifigkeit einer mit der Stellvorrichtung zu verstellenden Struktur. Beide Steifigkeiten sind gleichgewichtete Summanden der Steifigkeit der Rückstellkräfte $c_R$ und der Gesamtsteifigkeit $c_G$.

Die Erfindung wird im folgenden anhand von Ausführungsbeispielen näher erläutert und beschrieben. Dabei zeigt

Figur 1 den schematischen Aufbau einer ersten Ausführungsform der Stellvorrichtung,

Figur 2 den schematischen Aufbau einer zweiten Ausführungsform der Stellvorrichtung,

Figur 3 die bei der Stellvorrichtung gemäß Figur 1 oder Figur 2 auf das Stellelement einwirkenden Kräfte,

Figur 4 eine konkrete Ausführungsform einer Feder mit negativer Steifigkeit zur Verwendung bei der Stellvorrichtung gemäß Figur 1 oder Figur 2 im Längsschnitt,

Figur 5 die Feder mit negativer Steifigkeit in der Ausführungsform gemäß Figur 4 in der Draufsicht und

Figur 6 einen Anwendungsfall für die Stellvorrichtung gemäß Figur 1.

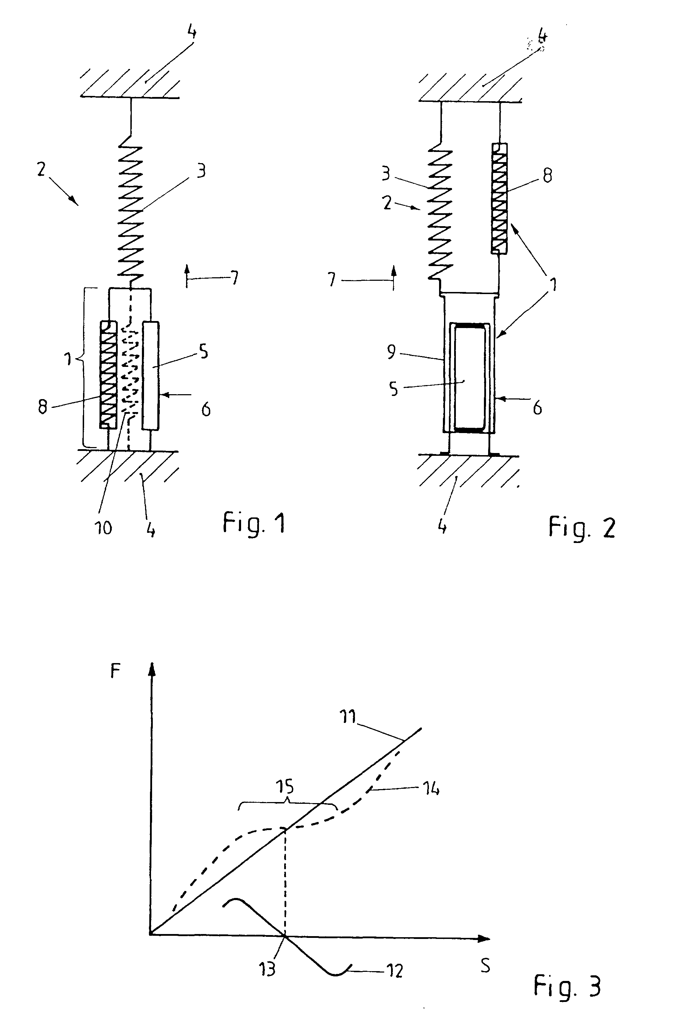

In Figur 1 ist eine Stellvorrichtung 1 wiedergegeben, die an einer Struktur 2 angreift, um diese beispielsweise zu verformen. Auf die Einflußnahme der Stellvorrichtung 1 auf die Struktur 2 wird hier allgemein als ein Verstellen der Struktur 2 Bezug genommen. Die Struktur 2 ist in Figur 1 durch eine mechanische Feder 3 angedeutet, deren Steifigkeit für die Steifigkeit der Struktur 2 gegenüber der Verstellung durch die Stellvorrichtung 1 steht. Sowohl die Stellvorrichtung 1 als auch die Struktur 2 stützen sich rückwärtig an einer gemeinsamen Basis 4 ab. Die Stellvorrichtung 1 weist ein Stellelement 5 auf, das mit einem Ansteuersignal 6 auf eine Längenänderung $\Delta l$ in Richtung eines Pfeils 7 ansteuerbar ist. Die Längenänderung $\Delta l$ des Stellelements 5 entspricht dem Stellweg der Stellvorrichtung 1. Der Verstellung der Struktur 2 mit der Stellvorrichtung 1 wirkt seitens der Struktur eine mit dem Stellweg zunehmende Rückstellkraft entgegen, die unter Berücksichtigung der Eigensteifigkeit des Stellelements 5 die effektive Längenänderung $\Delta l$ bei einem gegebenen Ansteuersignal 6 reduziert. Um dieser Reduktion der Längenänderung des Stellelements 5 und damit auch des effektiven Stellwegs der Stellvorrichtung 1 entgegenzuwirken, ist dem Stellelement 5 eine Feder 8 mit negativer Steifigkeit parallel geschaltet. Die Feder 8 weist in einem Nulldurchgang ihrer Federkennlinie eine negative Steigung, d.h. eine negative Steifigkeit auf, worauf im Zusammenhang mit Figur 3 näher eingegangen werden wird. Die negative Steifigkeit der Feder 8 kompensiert zumindest teilweise die positive Steifigkeit der Struktur 2, wodurch die Progressivität der Rückstellkräfte der Struktur 2 gegenüber einer Verstellung mit der Stellvorrichtung 1 effektiv reduziert wird. Im Ergebnis sind mit gleichen Ansteuersignalen 6 größere effektive Längenänderungen $\Delta l$ des Stellelement 5 und damit größere Stellwege realisierbar. Der Pfeil 7 in Figur 1 deutet an, daß die Struktur 2 von der Stellvorrichtung 1 zusammengedrückt wird, wobei das Stellelement 5 auf Druck belastet wird. Dies ist beispielsweise günstig, wenn das Stellelement 5 auf einem Piezokristall basiert, der sehr zugempfindlich ist. Wenn die Stellvorrichtung 1 die Struktur 2 auseinanderziehen soll, so ist eine in Figur 2 angedeutete Richtungsumlenkung 9 für das Stellelement 5 möglich. Es kann aber auch, wie in Figur 1 gestrichelt angedeutet ist, ein elastisches Element 10 vorgesehen sein, das dem Stellelement 5 parallel geschaltet ist und dieses unter eine Druckvorspannung setzt. Die Steifigkeit des elastischen Elements 10 geht dann wie die Steifigkeit der Struktur 2 in die Steifigkeit aller auf das Stellelement 5 einwirkenden mit dem Stellweg zunehmenden Rückstellkräfte ein, die den effektiven Stellweg der Stellvorrichtung 1 potentiell reduzieren.

In der bereits angesprochenen Figur 2 ist nicht nur die Richtungsumlenkung 9 für die Längenänderung $\Delta l$ des Stellelements 5 der Stellvorrichtung 1 vorgesehen, sondern als weiterer Unterschied zu Figur 1 ist die Feder 8 mit negativer Steifigkeit der Stellvorrichtung 1 nicht zwischen der Struktur 2 und der Basis 4 sondern zwischen der Basis 4 und dem Stellelement 5 angeordnet. Auch diese Anordnung entspricht einer Parallelschaltung der Feder 8 mit negativer Steifigkeit zu dem Stellelement 5 und ist nicht etwa deshalb erforderlich, weil die Richtung des Pfeils gemäß Figur 2 auf ein Auseinanderziehen der Struktur 2 mit dem Stellweg der Stellvorrichtung 1 hindeutet. Vielmehr könnte auch bei dieser Richtung des Stellwegs die Feder 8 mit negativer Steifigkeit dieselben endseitigen Angriffspunkte wie die Richtungsumlenkung 9 oder auch nur wie das Stellelement 5 aufweisen. Ebenso wäre die Anordnung der Feder 8 mit negativer Steifigkeit neben der Struktur 2 auch bei sonstiger Anordnung gemäß Figur 1 möglich. Dies ist darauf zurückzuführen, daß der Kraft-Weg-Verlauf der Feder 8 mit negativer Steifigkeit im Bereich des Nulldurchgangs ihrer Federkennlinie bezüglich der Richtung des Stellwegs der Stellvorrichtung 1 invariant ist. Unter Berücksichtigung des Grundsatzes actio gleich reactio ergibt sich daraus, daß die Feder 8 mit negativer Steifigkeit überall angeordnet werden kann, wo sie das Stellelement 5 gegenüber der Basis 4 beaufschlagt. Sowohl bei der Ausführungsform der Stellvorrichtung gemäß Figur 1 als auch bei der Ausführungsform der Stellvorrichtung gemäß Figur 2 versteht sich, daß die jeweils nebeneinander angeordneten Bauteile 5 und 8 bzw. 2 und 8 mit Parallelführungen versehen sein müssen, damit die von diesen Bauteilen in Richtung des Stellwegs ausgeübten Kräfte nicht zu irgendwelchen Kippmomenten führen.

Figur 3 gibt über dem Stellweg s der Stellvorrichtung 1 gemäß den Figuren 1 und 2 die von den einzelnen Bauteilen auf das Stellelement 5 ausgeübten Kräfte F wieder. Das heißt, es sind die Federkennlinien dieser Bauteile aufgetragen. Eine gradlinig vom Nullpunkt ansteigende Federkennlinie 11 ist die Federkennlinie aller auf das Stellelement 5 einwirkenden, mit dem Federweg zunehmenden Rückstellkräfte, d. h. insbesondere der von der Struktur 2, aber auch einschließlich der ggf. von einem elastischen Element 10 gemäß Figur 1 ausgehenden Rückstellkräfte. Die Federkennlinie 12 ist die Federkennlinie der Feder 8 mit negativer Steifigkeit. Die Federkennlinie 12 weist einen Nulldurchgang 13 mit negativer Steigung auf. Dies entspricht einer negativen Steifigkeit der Feder 8 in dem Nulldurchgang 13. In der Überlagerung der Federkennlinien 11 und 12 ergibt sich die gestrichelt wiedergegebene Gesamtfederkennlinie 14. Die Gesamtfederkennlinie 14 weist über einen Arbeitsbereich 15 des Stellwegs s, der symmetrisch um den Nulldurchgang 13 angeordnet ist, eine besonders geringe Steigung auf, die nahe null liegt. Diese geringe Steigung in dem Arbeitsbereich 15 entspricht einer geringen Gesamtsteifigkeit der auf das Stellelement 5 wirkenden Kräfte. Hierdurch wird die Reduzierung der effektiven Längenänderung $\Delta l$ durch die Rückstellkräfte minimiert, ohne daß die Rückstellkräfte im Mittel absolut gesenkt werden.

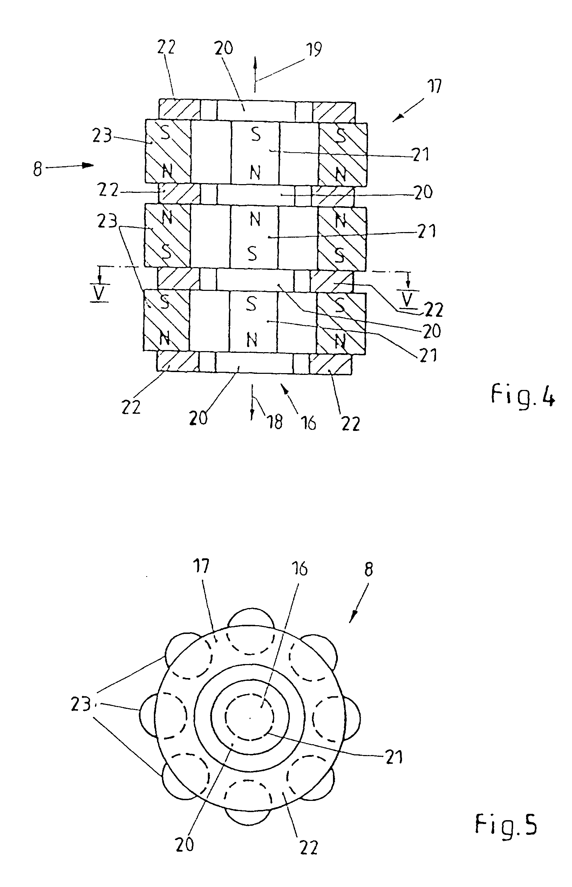

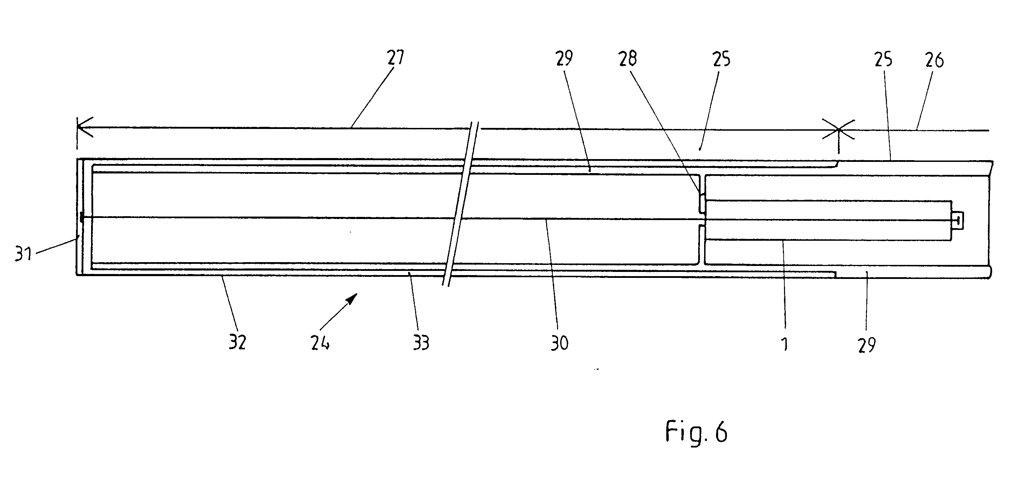

Ein konkretes Beispiel für die Feder 8 mit negativer Steifigkeit ist in den Figuren 4 und 5 wiedergegeben. Die Feder 8 weist demnach zwei Teile 16 und 17 auf, die sich bei Veränderungen des Stellwegs in Richtung der Pfeile 18 und 19 gegeneinander verschieben. Der Teil 16 der Feder 8 besteht aus unter Zwischenordnung von Weicheisenzwischenstücken 20 übereinander angeordneten Permanentmagneten 21. Dabei grenzen gleichnamige Pole N bzw. S der Permanentmagnete 21 jeweils an ein Weicheisenzwischenstück 20 an. Hierdurch wird eine Fokussierung der magnetischen Feldlinien bzw. des magnetischen Felds erreicht, das so gebündelt in radialer Richtung seitlich aus den Weicheisenzwischenstücken 20 austritt. Den Weicheisenzwischenstücken 20 des Teils 16 liegen ringförmige Weicheisenzwischenstücke 22 des anderen Teils 17 gegenüber. Zwischen den ringförmigen Weicheisenzwischenstücken 22 sind Permanentmagnete 23 angeordnet, wobei die Anordnung deren Pole derjenigen bei dem Permanentmagneten 21 entspricht. Allerdings ist zwischen jeweils zwei Weicheisenzwischenstücken 22 eine Mehrzahl von Permanentmagneten 23 angeordnet, wie dies aus Figur 5 hervorgeht. Die in Figur 4 dargestellte Relativstellung der Teile 16 und 17 entspricht dem Nulldurchgang 13 der Federkennlinie 12 gemäß Figur 3 und ist ein labiles Gleichgewicht. Sobald eine Auslenkung des Teils 16 gegenüber dem Teil 17 in Richtung des Pfeils 18 oder 19 erfolgt, treten abstoßende Kräfte zwischen den einander gegenüber angeordneten Weicheisenzwischenstücken 20 und 22 auf, die auf eine Vergrößerung der ursprünglichen Auslenkung gerichtet sind.

Bei dem in Figur 6 angedeuteten konkreten Anwendungsbeispiel der erfindungsgemäßen Stellvorrichtung 1, die der Ausführungsform gemäß Figur 1 entspricht, handelt es sich um den Aufbau einer adaptiven Blattspitze 24 eines Rotorblatts 25 für einen Hubschrauber. Das Rotorblatt 25 weist einen passiven Bereich 26 und einen daran anschließende aktiven Bereich 27 auf. Zwischen dem passivem Bereich 26 und dem aktiven Bereich 27 ist die Stellvorrichtung 1 angeordnet. Die Stellvorrichtung 1 stützt sich über einen Steg 28 an einem Holm 29 des Rotorblatts 25 als Basis ab. Über ein Zugelement 30, bei dem es sich um einen zugfesten CFK-Faserstrang handelt, beaufschlagt die Stellvorrichtung 1 eine Ankerplatte 31 am freien Ende der Blattspitze 24. Die Ankerplatte 4 beaufschlagt ihrerseits eine Torsionshaut 32 auf Druck. Die Torsionshaut 32 verursacht im aktiven Bereich 27 durch eine dort zusätzlich vorgesehene Lage helikal gewickelter Fasern eine Druck-Torsionskopplung. Hierbei ist die Torsionshaut 32 über eine elastische Zwischenschicht 33 mit dem Holm 29 verbunden. In dem passiven Bereich 26 ist das Rotorblatt 25 in konventioneller Weise aufgebaut. Der Übergangsbereich zwischen dem passiven Bereich 26 und dem aktiven Bereich 27 ist zur Vermeidung von Steifigkeitssprüngen stetig ausgebildet, was die Verbindung des Holms 29 mit der Torsionshaut 32 über die Elastische Zwischenschicht anbelangt. Die bei der Rotation an den beweglichen Bauteilen 30 und 31 und an den Massenelementen der Torsionshaut 32 auftretenden Zentrifugalkräfte stützen sich im Übergangsbereich über die Stellvorrichtung 1 und die Torsionshaut 32 an dem passiven Bereich 26 des Rotorblatts 25 ab. Hierbei wird der Aktuator aufgrund der Anbindung des Zugelements 30 nur auf Druckkräfte beansprucht. Bei der Druck-Torsionskopplung der Torsionshaut 32 handelt es sich um eine Verformungskopplung, so daß die von der Stellvorrichtung erzeugbaren Längenänderungen wesentlich für die Effizienz der Verformung im aktiven Bereich der Blattspitze 24 sind. Durch die Stellvorrichtung 1 gemäß Figur 1 werden im vorliegenden Fall die negativen Effekte der Eigensteifigkeit der Torsionshaut 32, die die effektive Längenänderung der Stellvorrichtung 1 potentiell reduzieren, innerhalb des Arbeitsbereichs des Stellwegs weitestgehend unterdrückt.

## BEZUGSZEICHENLISTE

1 -   Stellvorrichtung
2 -   Struktur
3 -   mechanische Feder
4 -   Basis
5 -   Stellelement
6 -   Ansteuersignal
7 -   Pfeil
8 -   Feder mit negativer Steifigkeit
9 -   Richtungsumlenkung
10 -   elastisches Mittel
11 -   Federkennlinie
12 -   Federkennlinie
13 -   Nulldurchgang
14 -   Federkennlinie
15 -   Arbeitsbereich
16 -   Teil der Feder 8
17 -   Teil der Feder 8
18 -   Pfeil
19 -   Pfeil
20 -   Weicheisenzwischenstück
21 -   Permanentmagnet
22 -   Weicheisenzwischenstück
23 -   Permanentmagnet
24 -   Blattspitze
25 -   Rotorblatt
26 -   passiver Bereich
27 -   aktiver Bereich
28 -   Steg
29 -   Holm
30 -   Zugelement
31 -   Ankerplatte
32 -   Torsionshaut
33 -   elastische Zwischenschicht
s -   Stellweg

F -   Kraft

## Patentansprüche

1. Stellvorrichtung mit einem Stellelement, das mit einem Ansteuersignal auf eine Längenänderung ansteuerbar ist und auf das eine eine positive Steifigkeit über seinem Stellweg aufweisende Rückstellkraft einwirkt, **dadurch gekennzeichnet, daß** eine eine negative Steifigkeit ($c_N$) in einem Nulldurchgang (13) ihrer Federkennlinie (12) aufweisende Feder (8) vorgesehen ist, um die positive Steifigkeit ($c_R$) der Rückstellkraft über einen Arbeitsbereich (15) des Stellwegs (s) zumindest teilweise zu kompensieren, wobei die Feder (8) mit negativer Steifigkeit ($c_N$) dem Stellelement (5) parallel geschaltet ist.

2. Stellvorrichtung nach Anspruch 1, **dadurch gekennzeichnet, daß** die Feder (8) mit negativer Steifigkeit ($c_N$) und das Stellelement (5) zwei gemeinsame endseitige Angriffspunkte aufweisen.

3. Stellvorrichtung nach einem der Ansprüche 1 und 2, **dadurch gekennzeichnet, daß** der Nulldurchgang (13) der Federkennlinie (12) der Feder (8) mit negativer Steifigkeit ($c_N$) in Richtung des Stellwegs (s) einstellbar ist.

4. Stellvorrichtung nach einem der Ansprüche 1 bis 3, **dadurch gekennzeichnet, daß** die Feder (8) mit negativer Steifigkeit ($c_N$) eine magnetische Feder ist.

5. Stellvorrichtung nach Anspruch 4, **dadurch gekennzeichnet, daß** die magnetische Feder (8) jeweils zwei mit Permanentmagneten (21, 23) versehene, sich über den Federweg (s) gegeneinander verschiebende Teile (16, 17) aufweist.

6. Stellvorrichtung nach Anspruch 5, **dadurch gekennzeichnet, daß** die beiden Teile (16, 17) der magnetischen Feder (8) jeweils mehrere, in Richtung des Federwegs (s) hintereinander geschaltete Permanentmagnete (21, 23) aufweisen, wobei zwischen den Permanentmagneten (21, 23) Weicheisenzwischenstücke (20, 22) angeordnet sind, an die die beiden benachbarten Permanentmagnete (21, 23) jeweils mit gleichnamigen Polen (N bzw. S) angrenzen.

7. Stellvorrichtung nach einem der Ansprüche 1 bis 6, **dadurch gekennzeichnet, daß** eine Über- oder Untersetzung für den Federweg (s) der Feder (8) mit negativer Steifigkeit ($c_N$) vorgesehen ist.

8. Stellvorrichtung nach einem der Ansprüche 1 bis 7, **dadurch gekennzeichnet, daß** das Stellelement (5) einen Piezokristall aufweist, wobei ein elastisches Mittel (10) vorgesehen ist, das den Piezokristall unter Druckvorspannung setzt.

## Claims

1. Controlling device having a controlling element which is controllable with regard to a change in length by a control signal, and on which acts a counter-force showing a positive stiffness over the controlling distance of the controlling element, **characterized in that** a spring (8) having a negative stiffness ($c_N$) in a zero-crossing (13) of its spring characteristic (12) is provided to at least partially compensate for the positive stiffness ($c_R$) of the counter-force within a working area (15) of the controlling distance (s), the spring (8) with negative stiffness ($c_N$) being arranged in parallel to the controlling element (5).

2. Controlling device according to claim 1, **characterized in that** the spring (8) with negative stiffness ($c_N$) and the controlling element (5) have two common points of application at their ends.

3. Controlling device according to any of the claims 1 and 2, **characterized in that** the crossing point (13) of the spring characteristic (12) of the spring (8) with negative stiffness ($c_N$) is adjustable in the direction of the spring excursion (s).

4. Controlling device according to any of the claims 1 to 3, **characterized in that** the spring (8) with negative stiffness ($c_N$) is a magnetic spring.

5. Controlling device according to claim 4, **characterized in that** the magnetic spring (8) comprises two parts (16, 17) provided with permanent magnets (21, 23), which parts are displaced with regard to each other with the spring excursion (s).

6. Controlling device according to claim 5, **characterized in that** each of the two parts (16, 17) of the magnetic spring (8) comprises permanent magnets (21, 23) arranged in series in the direction of the spring excursion (s), soft iron intermediate pieces (20, 22) being arranged between the permanent magnets (21, 23), each soft iron intermediate piece (20, 22) being contacted by the two adjacent permanent magnets (21, 23) via like poles (N or S).

7. Controlling device according to any of the claims 1 to 6, **characterized in that** an increasing or reducing gear is provided for the spring excursion (s) of the spring (8) with negative stiffness ($c_N$).

8. Controlling device according to any of the claims 1 to 7, **characterized in that** the controlling element (5) comprises a piezo crystal, an elastic device (10) being provided which puts the piezo crystal under a pressure pre-stress.

## Revendications

1. Dispositif de réglage comportant un élément de réglage dont une variation de la longueur peut être commandée par un signal de commande et sur lequel agit une force de rappel présentant une rigidité positive sur sa course de réglage, **caractérisé en ce qu'**il est prévu un ressort (8) présentant une rigidité négative ($C_N$) à un passage par zéro (13) de sa courbe caractéristique, afin de compenser au moins en partie la rigidité positive ($C_P$) de la force de rappel, sur une zone de travail (15) de la course de réglage (s), le ressort (8) de rigidité négative ($C_N$) étant couplé en parallèle à l'élément de réglage (5).

2. Dispositif de réglage selon la revendication 1, **caractérisé en ce que** le ressort (8) de rigidité négative ($C_N$) et l'élément de réglage (5) présentent deux points d'action terminaux communs.

3. Dispositif de réglage selon l'une des revendications 1 et 2, **caractérisé en ce que** le passage par zéro (13) de la courbe caractéristique (12) du ressort (8) de rigidité négative ($C_N$) est réglable dans la direction de la course de réglage (s).

4. Dispositif de réglage selon l'une des revendications 1 à 3, **caractérisé en ce que** le ressort (8) de rigidité négative ($C_N$) est un ressort magnétique.

5. Dispositif de réglage selon la revendication 4, **caractérisé en ce que** le ressort magnétique (8) comporte deux parties (16, 17) pouvant coulisser l'une par rapport à l'autre sur la course de ressort (s) et pourvues d'aimants permanents (21, 23).

6. Dispositif de réglage selon la revendication 5, **caractérisé en ce que** les deux parties (16, 17) du ressort magnétique (8) comportent chacune plusieurs aimants permanents (21, 23) montés l'un derrière l'autre dans la direction de la course de ressort (s), entre les aimants permanents (21, 23) étant disposées des pièces intercalaires en fer (20, 22) auxquelles font suite les deux aimants permanents (21, 23) voisins de même polarité (N ou S).

7. Dispositif de réglage selon l'une des revendications 1 à 6, **caractérisé en ce qu'**il est prévu une multiplication ou démultiplication pour la course (s) du ressort (8) de rigidité négative ($C_N$).

**8.** Dispositif de réglage selon l'une des revendications 1 à 7, **caractérisé en ce que** l'élément de réglage (5) comporte un piézo-cristal, un moyen élastique (10) étant prévu qui place le piézo-cristal sous précontrainte de pression.

Fig. 1

Fig. 2

Fig. 3

Fig. 4

Fig. 5

Fig. 6